# EUROPÄISCHE PATENTSCHRIFT

(11) **EP 3 016 760 B1**
(45) Veröffentlichungstag und Bekanntmachung des Hinweises auf die Patenterteilung: **11.08.2021**
(21) Anmeldenummer: 14736707.2
(22) Anmeldetag: 30.06.2014
(51) Int. Cl.: B21D 43/05, B21D 43/10, B23Q 1/60, B25J 18/02, B65G 47/91

(54) **VORRICHTUNG UND VERFAHREN ZUM TRANSFERIEREN EINES BAUTEILS UND WERKZEUGSYSTEM**
APPARATUS AND METHOD FOR TRANSFERRING A COMPONENT AND TOOL SYSTEM
DISPOSITIF ET PROCÉDÉ POUR TRANSFÉRER UN ÉLÉMENT ET SYSTÈME D'OUTIL

(30) Priorität: 30.06.2013 DE 102013010804
(43) Veröffentlichungstag der Anmeldung: 11.05.2016
(73) Patentinhaber: HSF Automation GmbH, 88287 Grünkraut-Gullen (DE)
(72) Erfinder: HAGEL, Martin, 88287 Grünkraut-Gullen (DE)
(74) Vertreter: Aurigium Leischner & Luthe
(86) Internationale Anmeldenummer: PCT/EP2014/063865
(87) Internationale Veröffentlichungsnummer: WO 2015/000855

(56) Entgegenhaltungen:
- EP-A2- 0 930 110
- WO-A1-2005/068103
- DE-A1- 19 641 879
- FR-A1- 2 921 578
- None

## Beschreibung

Die vorliegende Erfindung bezieht sich auf eine Vorrichtung zum Transferieren eines Bauteils zu einer Presse gemäß den Merkmalen des Oberbegriffs des Patentanspruchs 1, sowie auf ein Verfahren zum Transferieren eines Bauteils von einer ersten Presse zu einer zweiten Presse.

Pressenverkettungen mit Linear Feedern (translatorische Linearachsen) sind hinlänglich bekannt. Dabei kommen öfters Teleskopachsen zum Einsatz. Aufgrund der langen Verfahrwege haben diese den Vorteil die Bewegung auf verschiedene Maschinenelemente aufzuteilen und dabei die Geschwindigkeit der einzelnen Komponenten zu reduzieren. Dabei werden zwei Träger gegeneinander im gleichen Verhältnis verschoben. Die Verbindung der beiden Träger wird durch eine verschiebbare Basis bewerkstelligt. Die Basis fährt dabei den halben Weg der Träger. Bei entsprechend großen zu überbrückenden Abstanden werden zum Teil auch zwei Teleskope miteinander kombiniert.

Die FR 2 921 578 A offenbart einen Handhabungsroboter für eine Palettiervorrichtung. Dabei ist eine auf Trägern geführte Brücke vorgesehen, von der ein Teleskopmast getragen und geführt wird. Der Teleskopmast besteht aus einer Vielzahl von Teilabschnitten, deren zentraler Teilabschnitt einen Aufnahmekopf für die zu palettierenden Produkte trägt. Die Teilabschnitte hängen mit Zahnrädern unterschiedlichen Durchmessers zusammenhängen, wobei die Durchmesser der Zahnräder jeweils an den Hub des Teilabschnitts angepasst sind, mit dem die Zahnräder über einzelne Kopplungselemente verbunden sind. Die Zahnräder sind auf einer gemeinsamen Welle montiert, die eine schwerkraftverursachte Verlängerungsbewegung und eine motorbetriebene Verkürzungsbewegung ausübt.

Die DE 19521 976 A1 offenbart ein Transportsystem zum Transportieren von Werkstücken durch Bearbeitungsstufen einer Presse. Das Transportsystem weist eine über einen Antrieb antreibbare Teleskopeinrichtung auf.

Die EP 0 930 110 A2, auf welche der Oberbegriff des Patentanspruchs 1 basiert, offenbart ein Transportsystem zum Transportieren von Werkstücken an einer Presse. Das Transportsystem weist eine über zwei Antriebe antreibbare Teleskopeinrichtung auf.

Es ist die Aufgabe der vorliegenden Erfindung eine verbesserte Vorrichtung zum Transferieren eines Bauteils zu einer Werkzeugeinrichtung, ein verbessertes Verfahren zum Transferieren eines Bauteils von einer ersten Werkzeugeinrichtung zu einer zweiten Werkzeugeinrichtung, eine verbesserte Steuereinrichtung zum Steuern einer Vorrichtung zum Transferieren eines Bauteils und ein verbessertes Werkzeugsystem zum Bearbeiten eines Bauteils zu schaffen.

Diese Aufgabe wird durch eine Vorrichtung zum Transferieren eines Bauteils und ein Verfahren zum Transferieren eines Bauteils gemäß den Hautpansprüchen gelöst.

Eine Vorrichtung zum Transferieren eines Bauteils zu einer Presse, weist die folgenden Merkmale auf: ein Gestell;
eine Verfahreinrichtung mit einem ersten Antrieb zum Verfahren der Verfahreinrichtung gegenüber dem Gestell; und
eine Teleskopeinrichtung mit einer Basis, die entlang eines ersten Verfahrwegs gegenüber der Verfahreinrichtung verfahrbar ist, einem Träger, der entlang eines zweiten Verfahrwegs gegenüber der Basis verfahrbar ist, einem Schlitten zum Transferieren des Bauteils, wobei der Schlitten entlang eines dritten Verfahrwegs gegenüber dem Träger verfahrbar ist, einem zweiten Antrieb und einer Übersetzungseinrichtung, wobei die Übersetzungseinrichtung ausgebildet ist, um eine Antriebsbewegung des zweiten Antriebs mit einer ersten Übersetzung auf die Basis, mit einer zweiten Übersetzung auf den Träger und mit einer dritten Übersetzung auf den Schlitten zu übertragen, um die Basis entlang des ersten Verfahrwegs, den Träger entlang des zweiten Verfahrwegs und den Schlitten entlang des dritten Verfahrwegs zu bewegen, wobei sich zumindest zwei der Übersetzungen voneinander unterscheiden.

Bei dem Bauteil kann es sich beispielsweise um ein zu verformendes Teil, beispielsweise ein Metallteil handeln. Unter einem Gestell kann eine Struktur verstanden werden, über die die Vorrichtung ortsfest befestigt werden kann. Unter einer Verfahreinrichtung kann eine Einrichtung zum Bewegen der Teleskopeinrichtung gegenüber dem Gestell verstanden werden. Beispielsweise kann die Verfahreinrichtung als eine weitere Teleskopeinrichtung, als eine Schwenkeinrichtung oder als eine Achse ausgeführt sein. Unter einer Achse kann eine Kombination aus einem Antrieb und einer Mechanik verstanden werden. Die Verfahreinrichtung kann durch eine Antriebsbewegung des ersten Antriebs bewegt werden. Ein Antrieb kann beispielsweise als ein elektrischer, hydraulischer oder pneumatischer Antrieb ausgeführt sein. Unter einer Teleskopeinrichtung können mehrere zueinander beweglich angeordnete Teleskopelemente, hier Basis, Träger und Schlitten genannt verstanden werden. Die Teleskopelemente können über geeignete Schienen oder Führungen gegeneinander verschiebbar angeordnet sein, sodass die Teleskopelemente Relativbewegungen zueinander ausführen können. Die Teleskopeinrichtung kann beispielsweise auch als Achse, Feeder, Linear Feeder, Teleskopfeeder oder Teleskop bezeichnet werden. Die Verfahrwege der Teleskopeinrichtung können translatorisch sein. Es kann sich um lineare Wege handeln. Die Verfahrwege der Teleskopeinrichtung können parallel zueinander verlaufen. Die Antriebsbewegung des zweiten Antriebs kann über die Übersetzungseinrichtung auf die Basis, den Träger und den Schlitten übertragen werden. Die Übersetzungseinrichtung kann geeignete Übersetzungselemente oder Getriebeelemente, beispielsweise Zahnräder, Zahnstangen oder Riemen umfassen, durch die die Antriebsbewegung des zweiten Antriebs in der jeweils vorgesehenen Übersetzung auf die Teleskopelemente übertragen wird. Unter einer Übersetzung kann hier ein Übersetzungsverhältnis verstanden werden.

Durch zumindest zwei unterschiedliche Übersetzungen können sich zumindest zwei der Verfahrwege voneinander unterscheiden. Ebenso können sich zumindest zwei Verfahrgeschwindigkeiten, mit denen die einzelnen Teleskopelemente verfahren werden, voneinander unterscheiden. Dadurch, dass sich zumindest zwei der Übersetzungen voneinander unterscheiden, kann beispielsweise festgelegt werden, welches der Teleskopelemente vorauseilend fährt.

Beispielsweise kann sich die zweite Übersetzung zum Übertragen der Antriebsbewegung auf den Träger von zumindest einer der anderen Übersetzungen unterscheiden. Beispielsweise kann sich die zweite Übersetzung von der ersten und/oder der dritten Übersetzung unterscheiden. Entsprechend kann sich die zweite Übersetzung von einer Übersetzung der Verfahreinrichtung unterscheiden. Dadurch kann beispielsweise verhindert werden, dass der Träger vorauseilend fährt.

Gemäß einem Ausführungsbeispiel unterscheiden sich die erste Übersetzung, die zweite Übersetzung und die dritte Übersetzung voneinander. Ebenso können sich die Übersetzungen der Teleskopeinrichtung von einer oder mehreren Übersetzungen der Verfahreinrichtung unterscheiden. Auf diese Weise kann ein zeitlicher Verlauf eines Verfahrvorgangs der Vorrichtung sehr genau eingestellt werden.

Der zweite Antrieb kann beispielsweise an der Basis angeordnet sein. In diesem Fall können Übersetzungseinheiten der Übersetzungseinrichtung, die die zweite Übersetzung und die dritte Übersetzung realisieren, innerhalb des Trägers integriert angeordnet sein. Dies ermöglicht eine sehr Bauraum sparende Anordnung.

Die Übersetzungseinrichtung kann ausgebildet sein, um die Antriebsbewegung gleichzeitig auf die Basis, den Träger und den Schlitten zu übertragen. Auf diese Weise können die Basis, der Träger und der Schlitten durch die Antriebsbewegung des zweiten Antriebs gleichzeitig bewegt werden.

Gemäß einem Ausführungsbeispiel können die Verfahrwege so aufeinander und auf einen Abstand zwischen der Vorrichtung und der zumindest einen Werkzeugeinrichtung abgestimmt sein, das in einem weitmöglichst in Richtung der zumindest einen Werkzeugeinrichtung verfahrenen Zustand der Verfahreinrichtung und der Teleskopeinrichtung ausschließlich der Schlitten und ein freies Ende des Trägers in einen Werkzeugraum des zumindest einen Werkzeugs hineinragen. Der Werkzeugraum kann beispielsweise einen Raum kennzeichnen, in dem sich das Bauteil während einer Bearbeitung durch die Werkzeugeinrichtung befindet. Beispielsweise kann es sich bei dem Werkzeugraum um einen zwischen zwei Presselementen liegenden Raum handeln. Unter einem weitmöglichst verfahrenen Zustand kann eine Strecklage verstanden werden. Unter einem freien Ende des Trägers kann ein Abschnitt des Trägers verstanden werden, der nicht mit der Basis überlappt. Indem die Basis außerhalb des Werkzeugraums verbleibt, kann das Bauteil bereits bei einer relativ schmalen Öffnung der Werkzeugeinrichtung in den Werkzeugraum eingefahren werden.

Die Verfahreinrichtung kann als eine weitere Teleskopeinrichtung mit einer weiteren Basis, die entlang eines weiteren ersten Verfahrwegs gegenüber dem Gestell verfahrbar ist, einem weiteren Träger, der entlang eines weiteren zweiten Verfahrwegs gegenüber der weiteren Basis verfahrbar ist, und einer weiteren Übersetzungseinrichtung ausgeführt sein. Dabei kann die weitere Übersetzungseinrichtung ausgebildet sein, um eine weitere Antriebsbewegung des ersten Antriebs mit einer weiteren ersten Übersetzung auf die weitere Basis und mit einer weiteren zweiten Übersetzung auf den weiteren Träger zu übertragen, um die weitere Basis entlang des weiteren ersten Verfahrwegs und den weiteren Träger entlang des weiteren zweiten Verfahrwegs zu bewegen. Der weitere erste Verfahrweg und der erste Verfahrweg können sich ebenso wie der weitere zweite Verfahrweg und der zweite Verfahrweg voneinander unterscheiden. Entsprechend können sich die erste Übersetzung und die weitere erste Übersetzung sowie die zweite Übersetzung und die zweite weitere Übersetzung voneinander unterscheiden. Durch die Verwendung von mindesten zwei Teleskopeinrichtungen kann ein großer translatorischer Gesamtverfahrweg realisiert werden.

Ein Verfahren zum Transferieren eines Bauteils von einer ersten Presse zu einer zweiten Presse unter Verwendung einer genannten Vorrichtung umfasst die folgenden Schritte: Ausfahren der Teleskopeinrichtung aus einem in Richtung der ersten Presse ausgefahrenen Zustand in einen in Richtung der zweiten Presse vollständig ausgefahrenen Zustand; und Verfahren der Verfahreinrichtung in einen in Richtung der zweiten Presse ausgefahrenen Zustand, während sich die Teleskopeinrichtung in dem in Richtung der zweiten Presse vollständig ausgefahrenen Zustand befindet.

Die Vorrichtung kann zwischen den Werkzeugeinrichtungen angeordnet sein. Unter einem vollständig ausgefahrenen Zustand kann eine Strecklage verstanden werden. Beispielsweise kann im Schritt des Ausfahrens der Teleskopeinrichtung die Teleskopeinrichtung von einer in Richtung der ersten Werkzeugeinrichtung zeigenden ersten Strecklage in eine in Richtung der zweiten Werkzeugeinrichtung zeigenden zweiten Strecklage verfahren werden. Dabei können die Teleskopelemente der Teleskopeinrichtung kontinuierlich verfahren werden. Indem die Verfahreinrichtung erst oder erst vollständig in Richtung der zweiten Werkzeugeinrichtung verfahren wird, nachdem die Teleskopeinrichtung die zweite Strecklage eingenommen hat, kann eine Stillstandzeit der zweiten Werkzeugeinrichtung zum Verhindern einer Kollision der Vorrichtung mit der zweiten Werkzeugeinrichtung vermieden oder zumindest verkürzt werden.

Dabei kann das Verfahren einen Schritt des vorläufigen Verfahrens der Verfahreinrichtung aus einem in Richtung der ersten Werkzeugeinrichtung ausgefahrenen Zustand in einen Zwischenzustand umfassen. Dabei kann der Schritt des vorläufigen Verfahrens während des Schritts des Ausfahrens der Teleskopeinrichtung ausgeführt werden. Auf diese Weise kann die gesamte Verfahrzeit zum Verfahren des Bauteils zwischen den zwei Werkzeugeinrichtungen verkürzt werden.

In dem Schritt des vorläufigen Verfahrens der Verfahreinrichtung und dem Schritt des Ausfahrens der Teleskopeinrichtung kann eine erste Antriebsbewegung des ersten Antriebs geringer als die zweite Antriebsbewegung des zweiten Antriebs sein. Dadurch kann eine Verfahrgeschwindigkeit der Teleskopeinrichtung größer als eine Verfahrgeschwindigkeit der Verfahreinrichtung sein und die Teleskopelemente der Teleskopeinrichtung können den Elementen der Verfahreinrichtung vorauseilen.

In die entgegengesetzte Richtung können die Verfahreinrichtung und die Teleskopeinrichtung entsprechend bewegt werden. So kann ein Schritt des Ausfahrens der Teleskopeinrichtung aus einem in Richtung der zweiten Werkzeugeinrichtung ausgefahrenen Zustand in einen in Richtung der ersten Werkzeugeinrichtung vollständig ausgefahrenen Zustand durchgeführt werden. In einem Schritt des Verfahrens kann die Verfahreinrichtung dann in einen in Richtung der ersten Werkzeugeinrichtung ausgefahrenen Zustand verfahren werden, während sich die Teleskopeinrichtung in dem in Richtung der ersten Werkzeugeinrichtung vollständig ausgefahrenen Zustand befindet. Alternativ kann die Verfahreinrichtung beispielsweise zeitgleich in Richtung der ersten Werkzeugeinrichtung verfahren werden, beispielsweise wenn die erste Werkzeugeinrichtung bereits ausreichend weit geöffnet ist.

Eine Steuereinrichtung zum Steuern einer genannten Vorrichtung ist ausgebildet, um ein erstes Steuersignal zum Steuern der ersten Antriebsbewegung des ersten Antriebs an eine erste Schnittstelle zu dem ersten Antrieb und ein zweites Steuersignal zum Steuern einer zweiten Antriebsbewegung des zweiten Antriebs an eine zweite Schnittstelle zu dem zweiten Antrieb bereitzustellen, um die Verfahreinrichtung und die Teleskopeinrichtung gemäß einem genannten Verfahren zu bewegen. Eine Steuereinrichtung kann beispielsweise ein Gerät sein, das eine Steuerlogik zum Erzeugen der Steuersignale aufweist. Beispielsweise kann ein Softwareprogramm auf Einrichtungen der Steuereinrichtung ausgeführt werden, um die Steuersignale zu erzeugen. Die Schnittstellen können beispielsweise durch elektrische, pneumatische oder hydraulische Anschlüsse der Antriebe realisiert sein. Im Falle eines elektrischen Antriebs kann ein Steuersignal eine Steuerspannung oder ein Steuerstrom sein.

Ein Werkzeugsystem zum Bearbeiten eines Bauteils weist die folgenden Merkmale auf:
eine erste Werkzeugeinrichtung, das heisst eine erste Presse, zum Durchführen einer ersten Bearbeitung des Bauteils;
eine zweite Werkzeugeinrichtung, das heisst eine zweite Presse, zum Durchführen einer zweiten Bearbeitung des Bauteils; und
eine genannte Vorrichtung zum Transferieren des Bauteils zwischen der ersten Werkzeugeinrichtung und der zweiten Werkzeugeinrichtung.

Somit kann der beschriebene Ansatz vorteilhaft bei einer Pressenverkettung, beispielsweise mit Linear Feedern, angewendet werden.

Die Vorrichtung kann mit zwei Teleskopen, also zwei parallelen Einheiten aus Teleskopeinrichtung und Verfahreinrichtung, links und rechts vom Werkzeug ausgeführt, ausgerüstet sein. Die zwei Teleskope können an dem Gestell befestigt sein. Die parallelen Teleskope können dabei über einen gemeinsamen Schlitten oder den Toolingbalken gekoppelt sein. Bei einer solchen Anordnung gibt es keine Probleme mit dem voreilenden Teil der Teleskope.

Alternativ können solche zwei parallelen Teleskope auch vor dem Werkzeug angeordnet sein. Durch den hier beschriebenen Ansatz können Probleme durch einen voreilenden Teil der Teleskope vermieden werden. Die beiden Teleskope können über einen gemeinsamen Schlitten oder den Toolingbalken gekoppelt sein oder nicht miteinander gekoppelt sein. Solche zwei Einheiten, beispielsweise vor dem Stössel einer oder zweier gegenüberliegender Werkzeugeinrichtungen angeordnet ermöglichen es beispielsweise die linke und rechte Seite des Werkzeugs separat abzudecken.

Alternativ kann die Vorrichtung ledigliche ein Teleskop, also eine Einheit aus einer Teleskopeinrichtung und einer Verfahreinrichtung aufweisen, die vor dem Werkzeug der Werkzeugeinrichtung, beispielsweise dem Stößel einer Presse angeordnet sind. Vor dem Werkzeug kann dabei so verstanden werden, dass sich der Schlitten und zumindest ein Teil des den Schlitten führenden Trägers in den Werkzeugraum einfahren können. Beispielsweise kann das eine Teleskop mittig zu dem Werkzeug angeordnet sein. Eine solche mittige Anordnung ist kostensparend und einfach anzusteuern und erlaubt einen schnellen Transport auch vor dem Stössel. Somit ergibt sich ein geringer Kostenfaktor und es ist im Vergleich zu zwei parallelen Teleskopen eine einfache Steuerung ausreichend, da nicht zwei über den Toolingbalken gekoppelte Teleskope zu koordinieren sind.

Vorteilhafterweise ermöglicht es der beschriebene Ansatz im Bereich der Pressenautomatisierung zu vermeiden, das bei Teleskopfeedem während der Bewegung ein Träger vorauseilend fährt und der Schlitten erst in der Endlage am vorderen Punkt des Trägers zum Stehen kommt. Indem die vorauseilende Bewegung des Trägers vermieden wird, ist es nicht erforderlich zu warten, bis ein Werkzeug einer Werkzeugeinrichtung ausreichend geöffnet ist, damit der Träger nicht mit dem Werkzeug kollidiert. Somit kann die Werkzeugeinrichtung, beispielsweise eine Presse nicht nur im Einzelhub, das heißt, die Presse stoppt im oberen Totpunkt, betrieben werden. Indem ein solch sequenzieller Ablauf von Presse zur Automation nicht erforderlich ist, wird die Ausbringungsleistung stark erhöht.

Durch den beschriebenen Ansatz wird es ferner erleichtert die Feedereinheiten so kompakt zu bauen, dass sie in den vorhandenen Freiraum, beispielsweise zwischen den Pressen passen. Dies ist insbesondere bei kleineren Pressenabständen bei gleichbleibender Tischgröße der Presse eine Herausforderung.

Bevorzugte Ausführungsbeispiele der vorliegenden Erfindung werden nachfolgend Bezug nehmend auf die beiliegenden Zeichnungen näher erläutert. Es zeigen:
- Fig. 1: eine Darstellung einer sich in einem ersten Verfahrzustand befindlichen Vorrichtung zum Transferieren eines Bauteils, gemäß einem Ausführungsbeispiel der vorliegenden Erfindung; und
- Fig. 2: eine Darstellung einer sich in einem zweiten Verfahrzustand befindlichen Vorrichtung zum Transferieren eines Bauteils, gemäß einem Ausführungsbeispiel der vorliegenden Erfindung;
- Fig. 3: eine Darstellung einer sich in einem dritten Verfahrzustand befindlichen Vorrichtung zum Transferieren eines Bauteils, gemäß einem Ausführungsbeispiel der vorliegenden Erfindung;
- Fig. 4: eine Darstellung einer sich in einem vierten Verfahrzustand befindlichen Vorrichtung zum Transferieren eines Bauteils, gemäß einem Ausführungsbeispiel der vorliegenden Erfindung;
- Fig. 5: eine schematische Darstellung einer Vorrichtung zum Transferieren eines Bauteils, gemäß einem Ausführungsbeispiel der vorliegenden Erfindung; und
- Fig. 6: ein Ablaufdiagramm eines Verfahrens zum Transferieren eines Bauteils, gemäß einem Ausführungsbeispiel der vorliegenden Erfindung.

In der nachfolgenden Beschreibung der bevorzugten Ausführungsbeispiele der vorliegenden Erfindung werden für die in den verschiedenen Zeichnungen dargestellten und ähnlich wirkenden Elemente gleiche oder ähnliche Bezugszeichen verwendet, wobei eine wiederholte Beschreibung dieser Elemente weggelassen wird.

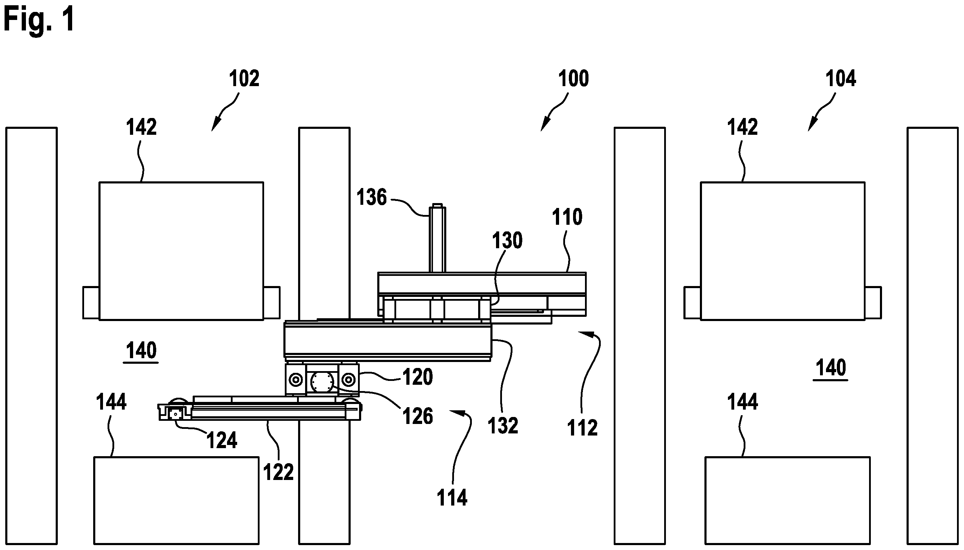

Fig. 1 zeigt eine Darstellung einer sich in einem ersten Verfahrzustand befindlichen Vorrichtung 100 zum Transferieren eines Bauteils gemäß einem Ausführungsbeispiel der vorliegenden Erfindung. Die Vorrichtung 100 ist zwischen zwei Werkzeugeinrichtungen angeordnet, die als eine erste Presse 102 und eine zweite Presse 104 dargestellt sind.

Die Vorrichtung 100 weist eine Verfahreinrichtung 112 und eine Teleskopeinrichtung 114 auf. Gemäß diesem Ausführungsbeispiel ist die Verfahreinrichtung 112 ebenfalls als eine Teleskopeinrichtung ausgeführt.

Die Teleskopeinrichtung 114 weist eine Basis 120, einen Träger 122, einen Schlitten 124 und einen Antrieb 126 auf. Ferner weist die Teleskopeinrichtung 114 eine Übersetzungseinrichtung auf, deren Elemente auf die Basis 120 und den Träger 122 verteilt angeordnet sein können.

Die Basis 120 ist so an der Verfahreinrichtung 112 befestigt, dass die Basis 120 entlang eines ersten Verfahrwegs gegenüber der Verfahreinrichtung 112 verfahrbar ist. Dazu ist die Basis 120 über die Übersetzungseinrichtung mit dem Antrieb 126 gekoppelt. Der Träger 122 ist so an der Basis 120 befestigt, dass der Träger 122 entlang eines zweiten Verfahrwegs gegenüber der Basis 120 verfahrbar ist. Dazu ist der Träger 122 über die Übersetzungseinrichtung mit dem Antrieb 126 gekoppelt. Der Schlitten 124 ist so an dem Träger 122 befestigt, dass der Schlitten 124 entlang eines dritten Verfahrwegs gegenüber dem Träger 122 verfahrbar ist. Dazu ist der Schlitten 124 über die Übersetzungseinrichtung mit dem Antrieb 126 gekoppelt.

Der Antrieb 126 ist gemäß diesem Ausführungsbeispiel an der Basis 120 angeordnet. Eine Antriebswelle des Antriebs 126 ist quer zu der Richtung der Verfahrwege ausgerichtet. In der Darstellung von Fig. 1 ist die Antriebswelle des Antriebs 126 horizontal ausgerichtet.

Die Basis 120 weist eine recheckförmige Gehäusestruktur auf.

Eine Länge des Trägers 122 kann in etwa einer dreifachen Länge der Basis 120, jeweils entlang einer Richtung der Verfahrwege gesehen, entsprechen. Eine Höhe des Trägers 122 kann beispielsweise der halben Höhe der Basis 120 entsprechen, oder weniger. In dem Träger 122 kann beispielsweise zumindest ein Zahnriemen oder zumindest eine Zahnstange der Übersetzungseinrichtung angeordnet sein.

Der Schlitten 124 ist entlang eines in Rands des Trägers 122 verfahrbar angeordnet. Der Schlitten 124 weist eine Aufnahmeeinrichtung zum Aufnehmen und Halten des Bauteils auf. Die Aufnahmeeinrichtung weist einen sich von dem Träger 122 quer, hier horizontal, wegerstreckenden Arm, beispielsweise in Form eines Toolingbalkens, auf.

Bei einer Antriebsbewegung des Antriebs 126 bewegen sich die Basis 120, der Träger 122 und der Schlitten 124 gleichzeitig. Die Bewegungen der Basis 120, des Trägers 122 und des Schlittens 124 können dabei aufgrund unterschiedlicher Übersetzungen zwischen dem Antrieb 126 und der Basis 120, dem Träger 122 sowie dem Schlitten 124 mit unterschiedlicher Geschwindigkeit erfolgen. Auf diese Weise können sich die Verfahrwege der Basis 120, des Trägers 122 und des Schlittens 124 in ihrer Länge unterscheiden.

Die Verfahreinrichtung 112 ist gemäß diesem Ausführungsbeispiel als eine weitere Teleskopeinrichtung mit einer weiteren Basis 130, einem weiteren Träger 132, und einem weiteren Antrieb 136 ausgeführt. Ferner weist die Verfahreinrichtung 112 eine weitere Übersetzungseinrichtung auf, deren Elemente auf die weitere Basis 130 und den weiteren Träger 132 verteilt angeordnet sein können. Die weitere Basis 130 ist so an dem Gestell 110 befestigt, dass die weitere Basis 130 entlang eines weiteren ersten Verfahrwegs gegenüber dem Gestell 110 verfahrbar ist. Dazu ist die weitere Basis 130 über die weitere Übersetzungseinrichtung mit dem weiteren Antrieb 136 gekoppelt. Der weitere Träger 132 ist so an der weiteren Basis 130 befestigt, dass der weitere Träger 132 entlang eines weiteren zweiten Verfahrwegs gegenüber der weiteren Basis 130 verfahrbar ist. Dazu ist der weitere Träger 132 über die weitere Übersetzungseinrichtung mit dem weiteren Antrieb 136 gekoppelt.

Der weitere Antrieb 136 ist gemäß diesem Ausführungsbeispiel an der weiteren Basis 130 angeordnet. Eine Antriebswelle des weiteren Antriebs 136 ist quer zu der Richtung der Verfahrwege und quer zu der Antriebswelle des Antriebs 126 ausgerichtet. In der Darstellung von Fig. 1 ist die Antriebswelle des weiteren Antriebs 136 vertikal ausgerichtet. Der weitere Antrieb 136 ist durch das Gestell 110 durchgeführt. Dazu weist das Gestell 110 eine längliche Durchgangsöffnung auf, durch die ein aus der weiteren Basis 130 herausragender Abschnitt des weiteren Antriebs 136 geführt ist.

Die weitere Basis 130 weist eine recheckförmige Gehäusestruktur auf.

Eine Länge des weiteren Trägers 132 kann größer als eine Länge des Trägers 122 sein. Eine Höhe des weiteren Trägers 132 kann größer als eine Höhe des Trägers 122 sein.

Bei einer Antriebsbewegung des weiteren Antriebs 136 bewegen sich die weitere Basis 130 und der weitere Träger 132 gleichzeitig. Die Bewegungen der weiteren Basis 130 und des weiteren Trägers 132 können dabei aufgrund unterschiedlicher Übersetzungen zwischen dem weiteren Antrieb 136 und der weiteren Basis 130 und dem weiteren Träger 132 mit unterschiedlicher Geschwindigkeit erfolgen. Auf diese Weise können sich die Verfahrwege der weiteren Basis 120 und des weiteren Trägers 122 in ihrer Länge unterscheiden.

Die Antriebe 126, 136 können unabhängig voneinander angesteuert werden. Auf diese Weise können die Teleskopelemente 120, 122, 124 der Teleskopeinrichtung 114 verfahren werden, während die Teleskopelemente 130, 132 der Verfahreinrichtung 112 stillstehen, und umgekehrt. Auch können die Antriebe 126, 136 so angesteuert werden, dass sie zumindest zeitweise Antriebsbewegungen mit unterschiedlicher Geschwindigkeit ausführen können.

Bei Antriebsbewegung der Antriebe 126, 136 mit gleicher Geschwindigkeit, beispielsweise einer gleichschnellen Drehbewegung der Antriebswellen der Antriebe 126, 136, können sich aufgrund zumindest zweier unterschiedlicher Übersetzungen, die Verfahrgeschwindigkeiten zumindest eines Teleskopelements 120, 122, 124 der Teleskopeinrichtung 114 und zumindest eines Teleskopelementes 130, 132 der Verfahreinrichtung 112 voneinander unterscheiden oder die Verfahrgeschwindigkeiten zumindest eines Teleskopelements 120, 122, 124 der Teleskopeinrichtung 114 voneinander unterscheiden.

In Fig. 1 ist die Vorrichtung 100 in einem Zustand gezeigt, der einer der ersten Presse 102 zugewandten Strecklage entspricht. Dabei sind die Teleskopelemente 120, 122, 124, 130, 132 der Teleskopeinrichtung 114 und der Verfahreinrichtung 112 weitestmöglich in Richtung der ersten Presse 102 verfahren. Der Schlitten 124 ist bis zu einem der ersten Presse 102 zugewandten Ende des Trägers 122 verfahren und ragt zusammen mit einem über die Basis 120 hinausragenden Abschnitts des Trägers 122 in einen Werkzeugraum 140 der ersten Presse 102 hinein. Der Werkzeugraum 140 ist zwischen zwei Presselementen 142, 144 der ersten Presse 102 angeordnet. Die weiteren Teleskopelemente 120, 126, 130, 132, 136 sind außerhalb des Werkzeugraums 140 angeordnet. Die Basis 120 ist bis zu einem der ersten Presse 102 zugewandten Ende des Trägers 132 verfahren.

Die Presselemente 142, 144 der zwei Pressen 102, 104 weisen eine in Richtung des Verfahrwegs des Schlittens 124 verlaufende Länge und eine quer zu der Richtung des Verfahrwegs des Schlittens 124 verlaufende Breite auf. Gemäß einem Ausführungsbeispiel ist die Vorrichtung 100 so zwischen den zwei Pressen 142, 144 angeordnet, dass der Verfahrweg des Schlittens 124 in etwa auf halber Breite der Presselemente 142, 144 den zwischen den geöffneten Presselementen 142, 144 angeordneten Werkzeugraum 140 trifft. Die Verfahrwege des Schlittens 124 und des Trägers 122 der Teleskopeinrichtung 124 können somit in etwa mittig in den Werkzeugraum 140 hineinführen.

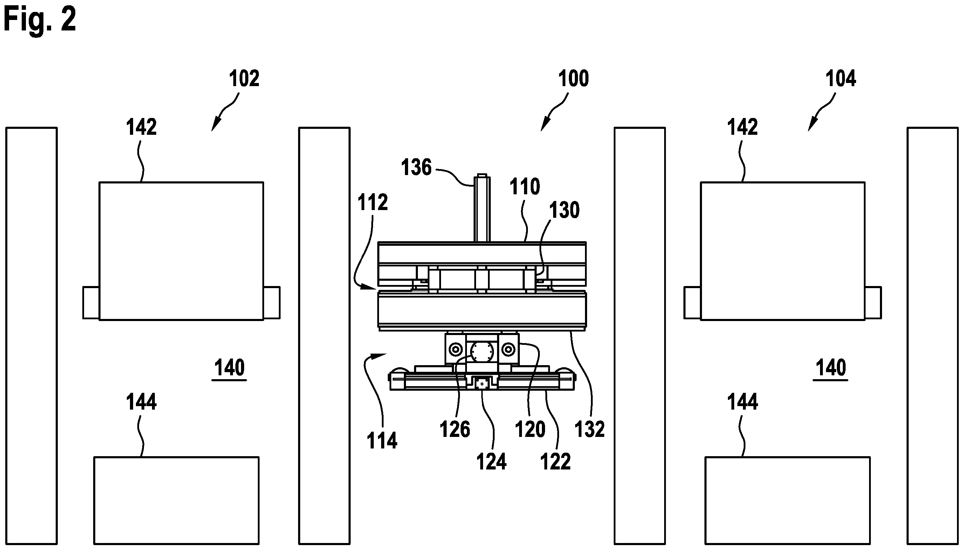

Fig. 2 zeigt eine Darstellung einer sich in einem zweiten Verfahrzustand befindlichen Vorrichtung 100 zum Transferieren eines Bauteils gemäß einem Ausführungsbeispiel der vorliegenden Erfindung. Gemäß diesem Ausführungsbeispiel handelt es sich bei der Vorrichtung 100 um die anhand von Fig. 1 beschriebene Vorrichtung 100 während einer Transferbewegung von der ersten Presse 102 zu der zweiten Presse 104.

In Fig. 2 ist die Vorrichtung 100 in einem Zustand gezeigt, in der sich alle Teleskopelemente 120, 122, 124, 130, 132 auf halben Weg in Richtung der zweiten Presse 104 befinden. Die weitere Basis 130 ist mittig in Bezug auf das Gestell 110, der weitere Träger 132 ist mittig in Bezug auf die weitere Basis 130, die Basis 120 ist mittig in Bezug auf den weiteren Träger 132, der Träger 122 ist mittig in Bezug auf die Basis 120 und der Schlitten 124 ist mittig in Bezug auf den Träger 122 angeordnet.

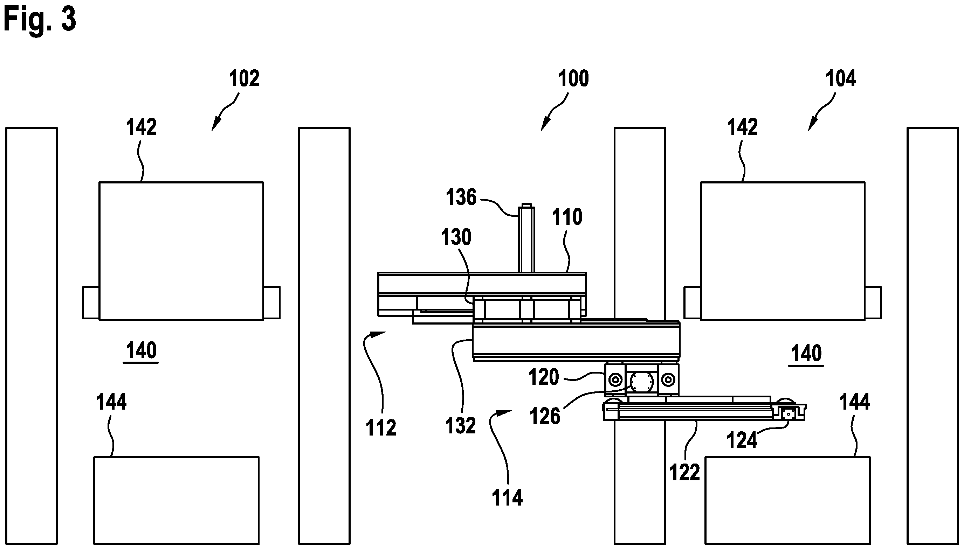

Fig. 3 zeigt eine Darstellung einer sich in einem dritten Verfahrzustand befindlichen Vorrichtung 100 zum Transferieren eines Bauteils gemäß einem Ausführungsbeispiel der vorliegenden Erfindung. Gemäß diesem Ausführungsbeispiel handelt es sich bei der Vorrichtung 100 um die anhand von Fig. 1 beschriebene Vorrichtung 100 während einer Transferbewegung von der ersten Presse 102 zu der zweiten Presse 104.

In Fig. 3 ist die Vorrichtung 100 in einem Zustand gezeigt, der einer der zweiten Presse 104 zugewandten Strecklage entspricht. Dabei sind die Teleskopelemente 120, 122, 124, 130, 132 der Teleskopeinrichtung 114 und der Verfahreinrichtung 112 weitestmöglich in Richtung der zweiten Presse 104 verfahren. Der Schlitten 124 ist bis zu einem der zweiten Presse 104 zugewandten Ende verfahren und ragt zusammen mit einem über die Basis 120 hinausragenden Abschnitts des Trägers 122 in einen Werkzeugraum 140 der zweiten Presse 104 hinein. Der Werkzeugraum 140 ist zwischen zwei Presselementen 142, 144 der zweiten Presse 102 angeordnet. Die weiteren Teleskopelemente 120, 126, 130, 132, 136 sind außerhalb des Werkzeugraums 140 angeordnet. Die Presselemente 142, 144 der beiden Pressen 102, 104 können sich voneinander unterscheiden.

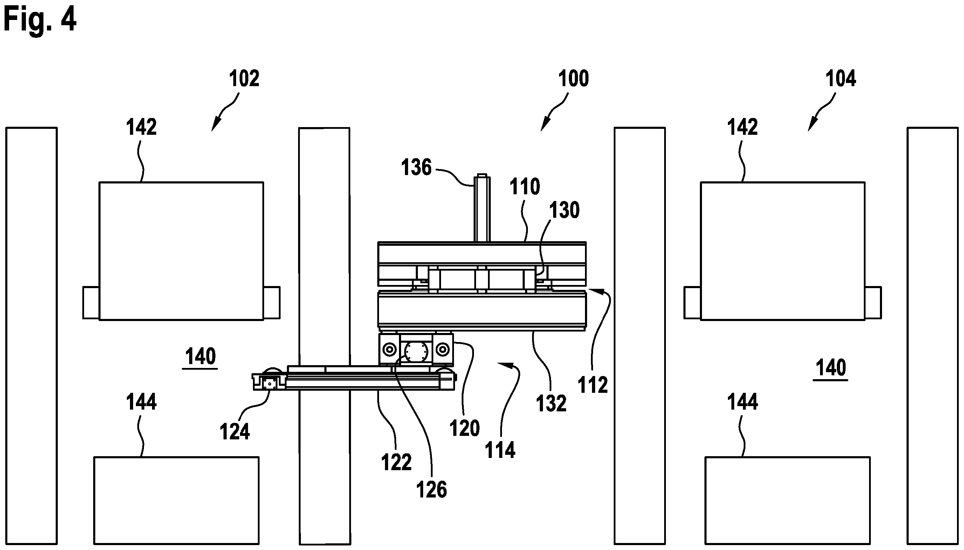

Fig. 4 zeigt eine Darstellung einer sich in einem vierten Verfahrzustand befindlichen Vorrichtung zum Transferieren eines Bauteils gemäß einem Ausführungsbeispiel der vorliegenden Erfindung. Gemäß diesem Ausführungsbeispiel handelt es sich bei der Vorrichtung 100 um die anhand von Fig. 1 beschriebene Vorrichtung 100 während einer Transferbewegung von der zweiten Presse 104 zu der ersten Presse 104.

In Fig. 4 ist die Vorrichtung 100 in einem Zustand gezeigt, in dem sich die Verfahreinrichtung 112 in einem Zwischenzustand und die Teleskopeinrichtung 114 in einer der ersten Presse 102 zugewandten Strecklage befindet. Dabei ist die weitere Basis 130 mittig in Bezug auf das Gestell 110 und der weitere Träger 132 ist mittig in Bezug auf die weitere Basis 130 angeordnet. Die Teleskopelemente 120, 122, 124 der Teleskopeinrichtung 114 sind, wie anhand von Fig. 1 beschrieben weitestmöglich in Richtung der ersten Presse 102 verfahren. Somit befindet sich die erste Teleskopeinrichtung 114 in einer der ersten Presse 102 zugewandten Strecklage.

Sobald sich die Teleskopeinrichtung 114 in der in Fig. 4 gezeigten Strecklage befindet, können die Teleskopelemente 130, 132 der Verfahreinrichtung 112 weiter oder beginnend in Richtung der ersten Presse verfahren werden. Auf diese Weise eilt der Schlitten 124 den weiteren Teleskopelementen 120, 122, 130, 132 voraus. Das Verfahren der Teleskopelemente 130, 132 der Verfahreinrichtung 112 kann, nachdem die Teleskopeinrichtung 114 die in der in Fig. 4 gezeigten Strecklage eingenommen hat, ausgehend von einer der zweiten Presse 104 zugewandten Strecklage der Verfahreinrichtung 112 oder ausgehend von einer Zwischenlage der Verfahreinrichtung 112, die nicht unbedingt die in Fig. 4 gezeigte mittige Lage sein muss, beginnen. Gemäß einem Ausführungsbeispiel können die Teleskopelemente 130, 132 der Verfahreinrichtung 112 in die Zwischenlage verfahren werden, während die Teleskopeinrichtung 114 in die in Fig. 4 gezeigte Strecklage verfahren werden. Die Zwischenlage kann beispielsweise mittig oder beispielsweise in einem Bereich zwischen einem Drittel und zwei Dritteln eines Gesamtverfahrwegs der Verfahreinrichtung zwischen den Pressen 102, 104 liegen.

Anhand der Figuren 1 bis 4 wird im Folgenden ein Ausführungsbeispiel der vorliegenden Erfindung beschrieben.

Das Ausführungsbeispiel basiert auf einem sequenziellen Fahren der beiden Teleskope 112, 114 mit entsprechender Überschneidung und einer Abstimmung der Verfahrwege durch verschiedene Übersetzungen der Achsen zueinander. Unter einer Achse wird hier eine Kombination aus Antrieb 126, 136 und den von dem Antrieb 126, 136 angetriebenen Teleskopelementen 120, 124, 126, 130, 132 verstanden, also eine Teleskopeinrichtung 112, 114.

In Durchlaufrichtung von der ersten Presse 102 zu der zweiten Presse 104, gezeigt in den Figuren 1 bis 3, werden beide Achsen 112, 114 synchron gefahren, da der Stössel der zweiten Presse 104 bereits geöffnet ist.

Nachdem das Bauteil zur zweiten Presse 104 transportiert wurde, fährt der Feeder der Vorrichtung 100 zurück zur ersten Presse 102. Dabei werden nacheinander die in den Figuren 4, 3 und 1 gezeigten Zustände eingenommen. In diese Richtung werden die Achsen 112, 114 somit asynchron gefahren, da der Stössel der ersten Presse 102 noch nicht oder noch nicht weit genug geöffnet ist. Durch Verlangsamung des Antriebs 136 fährt der Antrieb 126 die Teleskopachse 114 in die Strecklage mit dem Schlitten 124 und einem an dem Schlitten 124 befestigten Toolingbalken. Das Teleskop 112 fährt dabei nur den halben Hub. Sobald das Werkzeug der ersten Presse 102 weit genug geöffnet ist, fährt der Teleskopfeeder 112 mit dem Antrieb 136 den Schlitten 124 und das Teleskop 114 in die erste Presse 102.

Durch diesen optimierten Ablauf wird die Freigängigkeit vergrößert und die Automation hat mehr Zeit die Bauteile zu greifen und zu transportieren.

In dem gegebenen Bauraum zwischen den Pressen 102, 104 werden die Verfahrwege der einzelnen Komponenten 120, 122, 124, 130, 132 exakt aufeinander abgestimmt. Im Gegensatz zu den bekannten Teleskopen, bei denen sich die Verfahrwege immer halbieren, sind hier die Verfahrwege aller Maschinenteile 120, 122, 124, 130, 132 mit unterschiedlichen Übersetzungen auf den Raumbedarf der Pressen 102, 104 abgestimmt um nur mit dem sehr flachen Träger 122, der in den Figuren unten angeordnet ist, und dem Schlitten 124 in das Werkzeug einzufahren, während die restliche Mechanik außerhalb des Werkzeugs verbleibt

Die unterschiedlichen Übersetzungen sind notwendig, da die Verfahrung des Trägers 122 der hier unten angeordneten Teleskopeinrichtung 114 von der Tischtiefe der Presse 102, 104 abhängt, während die anderen Verfahrwege vom Pressenabstand der Pressen 102, 104 bestimmt sind.

Die Tischtiefe kann konstant bleiben, während die Pressenabstände variabel sind, und umgekehrt.

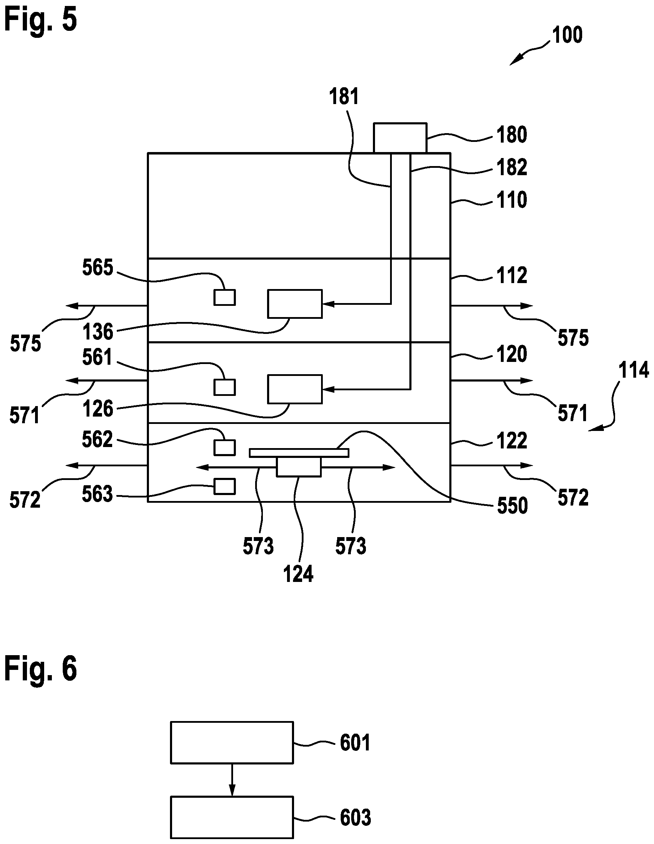

Fig. 5 zeigt eine schematische Darstellung einer Vorrichtung 100 zum Transferieren eines Bauteils 550 gemäß einem Ausführungsbeispiel der vorliegenden Erfindung. Bei der Vorrichtung 100 kann es sich um die anhand von Fig. 1 beschriebene Vorrichtung 100 handeln.

Gemäß einem Ausführungsbeispiel weist die Vorrichtung, wie anhand von Fig. 1 bereits beschrieben, eine Verfahreinrichtung 112 und eine Teleskopeinrichtung 114 auf. Die Verfahreinrichtung 112 weist einen Antrieb 136 und die Teleskopeinrichtung 114 weist einen Antrieb 126 auf. Die Teleskopeinrichtung 114 weist ferner eine Basis 120, einen Träger 122 und einen Schlitten 124 auf, die beispielsweise wie anhand von Fig. 1 beschrieben ausgeführt sein können. Schematisch ist das von dem Schlitten 124 gehaltene Bauteil 550 gezeigt.

Ferner ist in Fig. 5 rein schematisch eine Übersetzungseinrichtung der Teleskopeinrichtung 114 gezeigt. Die Übersetzungseinrichtung weist zumindest ein erstes Übersetzungselement 561 zum Übertragen einer Antriebsbewegung des Antriebs 126 auf die Basis 120, zumindest ein zweites Übersetzungselement 562 zum Übertragen der Antriebsbewegung des Antriebs 126 auf den Träger 122 und zumindest ein drittes Übersetzungselement 563 zum Übertragen der Antriebsbewegung des Antriebs 126 auf den Schlitten 124. Die Übersetzungselemente 561, 562, 563 können beispielsweise jeweils unterschiedliche Übersetzungsverhältnisse realisieren. Alternativ können beispielsweise das erste und das zweite Übersetzungselement 561, 562 das gleiche und das dritte Übersetzungselement 563 ein sich davon unterscheidendes Übersetzungsverhältnis realisieren. Alternativ können beispielsweise das erste und das dritte Übersetzungselement 561, 563 das gleiche und das zweite Übersetzungselement 562 ein sich davon unterscheidendes Übersetzungsverhältnis realisieren. Alternativ können beispielsweise das dritte und das zweite Übersetzungselement 563, 562 das gleiche und das erste Übersetzungselement 561 ein sich davon unterscheidendes Übersetzungsverhältnis realisieren.

Entsprechend schematisch ist eine Übersetzungseinrichtung 565 der Verfahreinrichtung 112 dargestellt.

Angetrieben durch den Antrieb 126 kann die Basis 120 entlang eines ersten Verfahrwegs 571, der Träger 122 entlang eines zweiten Verfahrwegs 572 und der Schlitten 124 entlang eines dritten Verfahrwegs 573 verfahren werden. Eine Summe der Verfahrwege 571, 572, 573 kann als ein Gesamtverfahrweg der Teleskopeinrichtung 114 bezeichnet werden. Die Verfahreinrichtung 112 kann angetrieben durch den Antrieb 136 entlang eines Verfahrwegs 575 verfahren werden. Ein Gesamtverfahrweg der Vorrichtung 100 kann sich aus der Summe eines Gesamtverfahrwegs der Teleskopeinrichtung 114 und einem Gesamtverfahrweg der Verfahreinrichtung 112 ergeben.

Beispielhaft ist in Fig. 5 eine Steuereinrichtung 180, beispielsweise in Form eines Steuergeräts zum Steuern der Vorrichtung 100 gezeigt. Beispielsweise kann die Steuereinrichtung 180 ausgebildet sein, um die Vorrichtung 100 so anzusteuern, dass die Vorrichtung 100 die anhand von Fig. 6 beschriebenen Verfahrbewegungen ausführen kann.

Die Steuereinrichtung 180 ist ausgebildet, um ein erstes Steuersignal 181 zum Steuern einer ersten Antriebsbewegung des Antriebs 136 der Verfahreinrichtung 112 zu erzeugen und an den Antrieb 136 auszugeben. Ferner ist die Steuereinrichtung 180 ausgebildet, um ein zweites Steuersignal 182 zum Steuern einer zweiten Antriebsbewegung des Antriebs 126 der Teleskopeinrichtung 114 zu erzeugen und an den Antrieb 126 auszugeben.

Die Steuereinrichtung 180 kann Teil der Vorrichtung 100 sein oder getrennt von der Vorrichtung 110 angeordnet sein.

Alternativ kann es sich bei der Vorrichtung 100 um eine Vorrichtung handeln, bei der insbesondere die Verfahreinrichtung 112 abweichend von der in Fig. 1 beschriebenen Ausführungsform ausgeführt ist, beispielsweise als eine Achse oder eine Schwenkeinrichtung. Gemäß einem weiteren Ausführungsbeispiel kann die Verfahreinrichtung 112 entfallen und die Basis der Teleskopeinrichtung 114 kann direkt mit dem Gestell 110 gekoppelt sein. Auch kann die Teleskopeinrichtung 114 eine von der bisher beschriebenen Anzahl von Teleskopelementen 120, 122, 124 abweichende Anzahl von Teleskopelementen aufweisen.

Auch kann die Vorrichtung 100 zwei Teleskopeinheiten aus Teleskopeinrichtung 114 und Verfahreinrichtungen 112 aufweisen, die wie beschrieben ausgeführt sein können, und parallel verlaufende Verfahrwege aufweisen. Die Verfahrwege solcher zwei oder mehr Teleskopeinheiten können auf einen Werkzeugraum einer Werkzeugeinrichtung hin ausgerichtet sein, sodass beispielsweise die Träger 122 der Teleskopeinrichtungen 114 in den Werkzeugraum hineinfahren können, oder aber seitlich versetzt zu dem Werkzeugraum verlaufen, sodass beispielsweise die Träger 122 der Teleskopeinrichtungen 114 seitlich neben dem Werkzeugraum vorbei verfahren werden können.

Fig. 6 zeigt ein Ablaufdiagramm eines Verfahrens zum Transferieren eines Bauteils von einer ersten Werkzeugeinrichtung zu einer zweiten Werkzeugeinrichtung gemäß einem Ausführungsbeispiel der vorliegenden Erfindung. Dabei kann das Verfahren unter Verwendung einer Vorrichtung ausgeführt werden, wie sie anhand der vorangegangenen Figuren beschrieben ist.

In einem Schritt 601 wird eine Teleskopeinrichtung der Vorrichtung, wie sie bereits anhand der vorangegangenen Figuren beschrieben wurde, aus einem in Richtung der ersten Werkzeugeinrichtung ausgefahrenen Zustand in einen in Richtung der zweiten Werkzeugeinrichtung vollständig ausgefahrenen Zustand ausgefahren. Die Teleskopelemente der Teleskopeinrichtung werden somit während der Durchführung des Schritts 601 in eine in Richtung der zweiten Werkzeugeinrichtung zeigenden Strecklage verfahren. Eine solche Strecklage der Teleskopeinrichtung ist beispielsweise in Fig. 4 in Bezug auf die erste Presse gezeigt.

Während der Durchführung des Schritts 601 kann sich eine Verfahreinrichtung der Vorrichtung, wie sie bereits anhand der vorangegangenen Figuren beschrieben wurde, entweder in Ruhe befinden, oder aus einem in Richtung der ersten Werkzeugeinrichtung ausgefahrenen Zustand in eine in Richtung der zweiten Werkzeugeinrichtung liegende Zwischenlage verfahren werden. Eine solche Zwischenlage kann sich auf einem geeigneten Punkt eines Gesamtverfahrwegs der Verfahreinrichtung befinden.

Wenn sich die Teleskopeinrichtung in dem in Richtung der zweiten Werkzeugeinrichtung vollständig ausgefahrenen Zustand befindet oder in einem in Richtung der zweiten Werkzeugeinrichtung nahezu vollständig ausgefahrenen Zustand befindet, wird in einem Schritt 603 die Verfahreinrichtung in einen in Richtung der zweiten Werkzeugeinrichtung vollständig ausgefahrenen Zustand ausgefahren. Im Schritt 603 kann das Verfahren der Verfahreinrichtung ausgehend von der Zwischenlage oder dem in Richtung der ersten Werkzeugeinrichtung ausgefahrenen Zustand begonnen werden.

Während der Durchführung des Schritts 603 kann sich die Teleskopeinrichtung in sich in Ruhe befinden und nur durch die Bewegung der Verfahreinrichtung bewegt werden oder eine noch fehlende Ausfahrbewegung zum Einnehmen der vollständigen Strecklage in Richtung der zweiten Werkzeugeinrichtung durchführen.

Zum Transferieren des Bauteils von der zweiten Werkzeugeinrichtung zu der ersten Werkzeugeinrichtung können die Schritte 601, 603 mit entgegengesetzten Bewegungsrichtungen wiederholt werden. Alternativ können die Verfahreinrichtung und die Teleskopeinrichtung auch synchron, wie es beispielsweise anhand der Figuren 2 bis 4 dargestellt ist, in Richtung der zweiten Werkzeugeinrichtung verfahren werden.

Die beschriebenen Ausführungsbeispiele sind nur beispielhaft gewählt und können miteinander kombiniert werden. Insbesondere kann die konstruktive Ausführung der gezeigten Elemente der Teleskopeinrichtung und der Verfahreinrichtung verändert werden.

## Patentansprüche

1. Vorrichtung (100) zum Transferieren eines Bauteils (550) zwischen einer ersten Presse (102) und einer gegenüberliegend zu der ersten Presse (102) angeordneten zweiten Presse (104), wobei die Vorrichtung (100) zwischen den Pressen (102, 104) anordenbar ist und die folgenden Merkmale umfasst:
ein Gestell (110);
eine Verfahreinrichtung (112) mit einem ersten Antrieb (136) zum Verfahren der Verfahreinrichtung (112) gegenüber dem Gestell (110) entlang eines Verfahrweges (575) in Richtung der ersten Presse (102) und in Richtung der zweiten Presse (104); **gekennzeichnet durch**
eine Teleskopeinrichtung (114) mit
- einer Basis (120), die entlang eines ersten Verfahrwegs (571) gegenüber der Verfahreinrichtung (112) verfahrbar ist,
- einem Träger (122), der entlang eines zweiten Verfahrwegs (572) gegenüber der Basis (120) verfahrbar ist,
- einem Schlitten (124) zum Transferieren des Bauteils (550), wobei der Schlitten (124) eine Aufnahmeeinrichtung zum Aufnehmen und Halten des Bauteils (550) aufweist und entlang eines Rands des Trägers (122) verfahrbar angeordnet und entlang eines dritten Verfahrwegs (573) gegenüber dem Träger (122) verfahrbar ist, wobei der Schlitten (124) bis zu einem der ersten Presse (102) zugewandten Ende des Trägers (122) verfahrbar ist, um zusammen mit einem über die Basis (120) hinausragenden Abschnitts des Trägers (122) in einen Werkzeugraum (140) der ersten Presse (102) hineinragen zu können, und wobei der Schlitten (124) bis zu einem der zweiten Presse (104) zugewandten Ende des Trägers (122) verfahrbar ist, um zusammen mit einem über die Basis (120) hinausragenden Abschnitts des Trägers (122) in einen Werkzeugraum (140) der zweiten Presse (104) hineinragen zu können,
- einem zweiten Antrieb (126) und einer Übersetzungseinrichtung (561, 562, 563), wobei die Übersetzungseinrichtung (561, 562, 563) ausgebildet ist, um eine Antriebsbewegung des zweiten Antriebs (126) mit einer ersten Übersetzung auf die Basis (120), mit einer zweiten Übersetzung auf den Träger (122) und mit einer dritten Übersetzung auf den Schlitten (124) zu übertragen, um die Basis (120) entlang des ersten Verfahrwegs (571), den Träger (122) entlang des zweiten Verfahrwegs (572) und den Schlitten (124) entlang des dritten Verfahrwegs (573) parallel zu dem Verfahrweg (575) der Verfahreinrichtung (112) in Richtung der ersten Presse (102) und in Richtung der zweiten Presse (104) zu bewegen, wobei sich zumindest zwei der Übersetzungen voneinander unterscheiden.

2. Vorrichtung (100) gemäß Anspruch 1, bei der sich die zweite Übersetzung zum Übertragen der Antriebsbewegung auf den Träger (122) von zumindest einer der anderen Übersetzungen unterscheidet.

3. Vorrichtung (100) gemäß einem der vorangegangenen Ansprüche, bei der sich die erste Übersetzung, die zweite Übersetzung und die dritte Übersetzung voneinander unterscheiden.

4. Vorrichtung (100) gemäß einem der vorangegangenen Ansprüche, bei der der zweite Antrieb (126) an der Basis (120) angeordnet ist, und Übersetzungseinheiten der Übersetzungseinrichtung (561, 562, 563), die die zweite Übersetzung und die dritte Übersetzung realisieren, innerhalb des Trägers (122) integriert angeordnet sind.

5. Vorrichtung (100) gemäß einem der vorangegangenen Ansprüche, bei der die Übersetzungseinrichtung (561, 562, 563) ausgebildet ist, um die Antriebsbewegung gleichzeitig auf die Basis (120), den Träger (122) und den Schlitten (124) zu übertragen.

6. Vorrichtung (100) gemäß einem der vorangegangenen Ansprüche, bei der die Verfahrwege (571, 572, 573, 575) so aufeinander und auf einen Abstand zwischen der Vorrichtung (100) und zumindest einer der Pressen (102, 104) abgestimmt sind, das in einem weitmöglichst in Richtung der zumindest einen der Pressen (102, 104) verfahrenen Zustand der Verfahreinrichtung (112) und der Teleskopeinrichtung (114) ausschließlich der Schlitten (124) und ein freies Ende des Trägers (122) in den Werkzeugraum der zumindest einen der Pressen (102, 104) hineinragen.

7. Vorrichtung (100) gemäß einem der vorangegangenen Ansprüche, bei der die Verfahreinrichtung (112) als eine weitere Teleskopeinrichtung (114) mit einer weiteren Basis (130), die entlang eines weiteren ersten Verfahrwegs gegenüber dem Gestell (110) verfahrbar ist, einem weiteren Träger (132), der entlang eines weiteren zweiten Verfahrwegs gegenüber der weiteren Basis (130) verfahrbar ist, und einer weiteren Übersetzungseinrichtung (565) ausgeführt ist, wobei die weitere Übersetzungseinrichtung (565) ausgebildet ist, um eine weitere Antriebsbewegung des ersten Antriebs (136) mit einer weiteren ersten Übersetzung auf die weitere Basis (130) und mit einer weiteren zweiten Übersetzung auf den weiteren Träger (132) zu übertragen, um die weitere Basis (130) entlang des weiteren ersten Verfahrwegs und den weiteren Träger (132) entlang des weiteren zweiten Verfahrwegs zu bewegen.

8. Verfahren zum Transferieren eines Bauteils (550) von einer ersten Presse (102) zu einer zweiten Presse (104) unter Verwendung einer Vorrichtung (100) gemäß einem der vorangegangenen Ansprüche, wobei das Verfahren die folgenden Schritte umfasst:
Ausfahren (601) der Teleskopeinrichtung (114) aus einem in Richtung der ersten Presse (102) ausgefahrenen Zustand in einen in Richtung der zweiten Presse (104) vollständig ausgefahrenen Zustand; und
Verfahren (603) der Verfahreinrichtung (112) in einen in Richtung der zweiten Presse (104) ausgefahrenen Zustand, während sich die Teleskopeinrichtung (114) in dem in Richtung der zweiten Presse (104) vollständig ausgefahrenen Zustand befindet.

9. Verfahren gemäß Anspruch 8, mit einem Schritt des vorläufigen Verfahrens der Verfahreinrichtung (112) aus einem in Richtung der ersten Presse (102) ausgefahrenen Zustand in einen Zwischenzustand, wobei der Schritt des vorläufigen Verfahrens während des Schritts des Ausfahrens der Teleskopeinrichtung (114) ausgeführt wird.

10. Verfahren gemäß Anspruch 9, bei dem in dem Schritt des vorläufigen Verfahrens der Verfahreinrichtung (112) und dem Schritt des Ausfahrens der Teleskopeinrichtung (114) eine erste Antriebsbewegung des ersten Antriebs (136) geringer ist als die zweite Antriebsbewegung des zweiten Antriebs (126).

11. Werkzeugsystem zum Bearbeiten eines Bauteils (550), wobei das Werkzeugsystem die folgenden Merkmale aufweist:
eine erste Presse (102) zum Durchführen einer ersten Bearbeitung des Bauteils (550);
eine zweite Presse (104) zum Durchführen einer zweiten Bearbeitung des Bauteils (550); und
eine Vorrichtung (100) gemäß einem der Ansprüche 1 bis 7 zum Transferieren des Bauteils (550) zwischen der ersten Presse (102) und der zweiten Presse (104), wobei die Vorrichtung (100) zwischen den Pressen (102, 104) angeordnet ist.

## Claims

1. Device (100) for transferring a component (550) between a first press (102) and a second press (104) arranged opposite to the first press (102), the device (100) being arrangeable between the presses (102, 104) and comprising:
a frame (110);
a traversing unit (112) with a first drive unit (136) for moving the traversing unit (112) with respect to the frame (110) along a travel path (575) in the direction of the first press (102) and in the direction of the second press (104);
**characterized by**
a telescopic unit (114) with
- a base (120) movable along a first travel path (571) with respect to the traversing unit (112),
- a support beam (122) movable along a second travel path (572) with respect to the base (120),
- a sliding carriage (124) for transferring the component (550), the sliding carriage (124) comprising a receptacle for receiving and holding the component (550) and being arranged so as to be movable along an edge of the support beam (122) and being movable along a third travel path (573) with respect to the support beam (122), wherein the sliding carriage (124) is movable to an end of the support beam (122) facing the first press (102), in order to be able to project, together with a portion of the support beam (122) protruding beyond the base (120), into a tool space (140) of the first press (102), and wherein the sliding carriage (124) is movable to an end of the support beam (122) facing the second press (104), in order to be able to project, together with a portion of the support beam (122) protruding beyond the base (120), into a tool space (140) of the second press (104),
- a second drive unit (126) and a transmission (561, 562, 563), the transmission (561, 562, 563) being formed to transmit a driving motion of the second drive unit (126) to the base (120) at a first transmission ratio, to the support beam (122) at a second transmission ratio and to the sliding carriage (124) at a third transmission ratio, in order to move the base (120) along the first travel path (571), move the support beam (122) along the second travel path (572) and move the sliding carriage (124) along the third travel path (573) parallel to the travel path (575) of the traversing unit (112) in the direction of the first press (102) and in the direction of the second press (104), wherein at least two of the transmission ratios differ from each other.

2. Device (100) according to claim 1, wherein the second transmission ratio for transmitting the driving motion to the support beam (122) differs from at least one of the other transmission ratios.

3. Device (100) according to one of the preceding claims, wherein the first transmission ratio, the second transmission ratio and the third transmission ratio differ from one another.

4. Device (100) according to one of the preceding claims, wherein the second drive unit (126) is arranged on the base (120), and transmission units of the transmission (561, 562, 563) which realize the second transmission ratio and the third transmission ratio are arranged so as to be integrated in the support beam (122).

5. Device (100) according to one of the preceding claims, wherein the transmission (561, 562, 563) is formed to transmit the driving motion to the base (120), the support beam (122) and the sliding carriage (124) simultaneously.

6. Device (100) according to one of the preceding claims, wherein the travel paths (571, 572, 573, 575) are matched with each other and with a distance between the device (100) and at least one of the presses (102, 104) so that only the sliding carriage (124) and a free end of the support beam (122) project into a tool space of the at least one of the presses (102, 104) when the traversing unit (112) and the telescopic unit (114) are moved as far as possible toward the at least one of the presses (102, 104).

7. Device (100) according to one of the preceding claims, wherein the traversing unit (112) is formed as a further telescopic unit (114) with a further base (130) movable along a further first travel path with respect to the frame (110), a further support beam (132) movable along a further second travel path with respect to the further base (130), and a further transmission (565), the further transmission (565) being formed to transmit a further driving motion of the first drive unit (136) to the further base (130) at a further first transmission ratio to the further support beam (132) at a further second transmission ratio, in order to move the further base (130) along the further first travel path and the further support beam (132) along the further second travel path.

8. Method for transferring a component (550) from a first press (102) to a second press (104), using a device (100) according to one of the preceding claims, the method comprising:
extending (601) the telescopic unit (114) from a state extended in the direction of the first press (102) to a state fully extended in the direction of the second press (104); and
moving (603) the traversing unit (112) to a state extended in the direction of the second press (104), while the telescopic unit (114) is in a state fully extended in the direction of the second press (104).

9. Method according to claim 8, comprising a step of temporarily moving the traversing unit (112) from a state extended in the direction of the first press (102) to an intermediate state, wherein the step of temporarily moving is executed during the step of extending the telescopic unit (114).

10. Method according to claim 9, wherein a first driving motion of the first drive unit (136) is less than a second driving motion of the second drive unit (126) in the step of temporarily moving the traversing unit (112) and the step of extending the telescopic unit (114).

11. Tool system for processing a component (550), the tool system comprising:
a first press (102) for performing first processing of the component (550);
a second press (104) for performing second processing of the component (550); and
a device (100) according to one of claims 1 to 7 for transferring the component (550) between the first press (102) and the second press (104), the device (100) being arranged between the presses (102, 104).

## Revendications

1. Dispositif (100) pour le transfert d'un composant (550) entre une première presse (102) et une deuxième presse (104) agencée en vis-à-vis de la première presse (102), le dispositif (100) pouvant être agencé entre les presses (102, 104) et comprenant les caractéristiques suivantes :
un bâti (110) ;
un appareil de déplacement (112) muni d'un premier entraînement (136) pour le déplacement de l'appareil de déplacement (112) par rapport au bâti (110) le long d'une trajectoire de déplacement (575) en direction de la première presse (102) et en direction de la deuxième presse (104) ;
**caractérisé par**
un appareil télescopique (114) muni
- d'une base (120), qui peut être déplacée le long d'une première trajectoire de déplacement (571) par rapport à l'appareil de déplacement (112),
- d'un support (122), qui peut être déplacé le long d'une deuxième trajectoire de déplacement (572) par rapport à la base (120),
- d'un chariot (124) pour le transfert du composant (550), le chariot (124) comprenant un appareil de réception pour la réception et le maintien du composant (550), et étant agencé de manière à pouvoir être déplacé le long d'un bord du support (122), et pouvant être déplacé le long d'une troisième trajectoire de déplacement (573) par rapport au support (122), le chariot (124) pouvant être déplacé jusqu'à une extrémité du support (122) tournée vers la première presse (102), afin de pouvoir pénétrer dans une chambre d'outil (140) de la première presse (102) conjointement avec une section du support (122) dépassant au-dessus de la base (120), et le chariot (124) pouvant être déplacé jusqu'à une extrémité du support (122) tournée vers la deuxième presse (104), afin de pouvoir pénétrer dans une chambre d'outil (140) de la deuxième presse (104) conjointement avec une section du support (122) dépassant au-dessus de la base (120),
- d'un deuxième entraînement (126) et d'un appareil de transmission (561, 562, 563), l'appareil de transmission (561, 562, 563) étant configuré pour transposer un mouvement d'entraînement du deuxième entraînement (126) avec une première transmission à la base (120), avec une deuxième transmission au support (122) et avec une troisième transmission au chariot (124), afin de mouvoir la base (120) le long de la première trajectoire de déplacement (571), le support (122) le long de la deuxième trajectoire de déplacement (572) et le chariot (124) le long de la troisième trajectoire de déplacement (573) parallèlement à la trajectoire de déplacement (575) de l'appareil de déplacement (112) en direction de la première presse (102) et en direction de la deuxième presse (104), au moins deux des transmissions se différenciant l'une de l'autre.

2. Dispositif (100) selon la revendication 1, dans lequel la deuxième transmission pour la transposition du mouvement d'entraînement au support (122) se différencie d'au moins une des autres transmissions.

3. Dispositif (100) selon l'une quelconque des revendications précédentes, dans lequel la première transmission, la deuxième transmission et la troisième transmission se différencient les unes des autres.

4. Dispositif (100) selon l'une quelconque des revendications précédentes, dans lequel le deuxième entraînement (126) est agencé sur la base (120), et des unités de transmission de l'appareil de transmission (561, 562, 563), qui réalisent la deuxième transmission et la troisième transmission, sont agencées de manière intégrée à l'intérieur du support (122).

5. Dispositif (100) selon l'une quelconque des revendications précédentes, dans lequel l'appareil de transmission (561, 562, 563) est configuré pour transposer le mouvement d'entraînement simultanément à la base (120), au support (122) et au chariot (124).

6. Dispositif (100) selon l'une quelconque des revendications précédentes, dans lequel les trajectoires de déplacement (571, 572, 573, 575) sont accordées les unes aux autres et à une distance entre le dispositif (100) et au moins une des presses (102, 104) de telle sorte que, dans un état déplacé le plus loin possible en direction de l'au moins une des presses (102, 104) de l'appareil de déplacement (112) et de l'appareil télescopique (114), exclusivement le chariot (124) et une extrémité libre du support (122) pénètrent dans la chambre d'outil de l'au moins une des presses (102, 104).

7. Dispositif (100) selon l'une quelconque des revendications précédentes, dans lequel l'appareil de déplacement (112) est exécuté sous la forme d'un appareil télescopique supplémentaire (114) muni d'une base supplémentaire (130), qui peut être déplacée le long d'une première trajectoire de déplacement supplémentaire par rapport au bâti (110), d'un support supplémentaire (132), qui peut être déplacé le long d'une deuxième trajectoire de déplacement supplémentaire par rapport à la base supplémentaire (130), et d'un appareil de transmission supplémentaire (565), l'appareil de transmission supplémentaire (565) étant configuré pour transposer un mouvement d'entraînement supplémentaire du premier entraînement (136) avec une première transmission supplémentaire à la base supplémentaire (130) et avec une deuxième transmission supplémentaire au support supplémentaire (132), afin de mouvoir la base supplémentaire (130) le long de la première trajectoire de déplacement supplémentaire et le support supplémentaire (132) le long de la deuxième trajectoire de déplacement supplémentaire.

8. Procédé pour le transfert d'un composant (550) d'une première presse (102) à une deuxième presse (104) en utilisant un dispositif (100) selon l'une quelconque des revendications précédentes, le procédé comprenant les étapes suivantes :
le déploiement (601) de l'appareil télescopique (114) d'un état déployé en direction de la première presse (102) dans un état entièrement déployé en direction de la deuxième presse (104) ; et
le déplacement (603) de l'appareil de déplacement (112) dans un état déployé en direction de la deuxième presse (104), tandis que l'appareil télescopique (114) se trouve dans l'état entièrement déployé en direction de la deuxième presse (104).

9. Procédé selon la revendication 8, comprenant une étape de déplacement préliminaire de l'appareil de déplacement (112) d'un état déployé en direction de la première presse (102) dans un état intermédiaire, l'étape de déplacement préliminaire étant exécutée pendant l'étape de déploiement de l'appareil télescopique (114).

10. Procédé selon la revendication 9, dans lequel, dans l'étape de déplacement préliminaire de l'appareil de déplacement (112) et l'étape de déploiement de l'appareil télescopique (114), un premier mouvement d'entraînement du premier entraînement (136) est plus faible que le deuxième mouvement d'entraînement du deuxième entraînement (126).

11. Système d'outil pour l'usinage d'un composant (550), le système d'outil présentant les caractéristiques suivantes :
une première presse (102) pour la réalisation d'un premier usinage du composant (550) ;
une deuxième presse (104) pour la réalisation d'un deuxième usinage du composant (550) ; et
un dispositif (100) selon l'une quelconque des revendications 1 à 7 pour le transfert du composant (550) entre la première presse (102) et la deuxième presse (104), le dispositif (100) étant agencé entre les presses (102, 104).
